# EUROPÄISCHE PATENTSCHRIFT

(11) **EP 3 717 311 B1**
(45) Veröffentlichungstag und Bekanntmachung des Hinweises auf die Patenterteilung: **16.08.2023**
(21) Anmeldenummer: 18789386.2
(22) Anmeldetag: 17.10.2018
(51) Int. Cl.: B60S 1/38

(54) **WISCHLEISTE FÜR EIN WISCHBLATT**
WIPER STRIP FOR A WIPER BLADE
LAME D'ESSUIE-GLACE POUR BALAI D'ESSUIE-GLACE

(30) Priorität: 28.11.2017 DE 102017221299
(43) Veröffentlichungstag der Anmeldung: 07.10.2020
(73) Patentinhaber: Robert Bosch GmbH, 70442 Stuttgart (DE)
(72) Erfinder: NIVELLES, Christiaan, 3530 Helchteren (BE); BUSEYNE, Wim, 3500 Hasselt (BE)
(86) Internationale Anmeldenummer: PCT/EP2018/078396
(87) Internationale Veröffentlichungsnummer: WO 2019/105648

(56) Entgegenhaltungen:
- DE-A1- 10 058 455
- DE-A1-102005 059 432
- GB-A- 707 559
- JP-A- H09 193 750
- JP-U- S6 170 172
- US-A- 3 414 930
- US-A1- 2016 052 491

## Beschreibung

### Stand der Technik

Es ist bereits eine Wischleiste für ein Wischblatt, mit zumindest einer Wischlippe, welche zu einem direkten Anliegen an eine Fahrzeugscheibe vorgesehen ist, und mit zumindest einem Grundkörper, der eine Aufnahmenut zu einer Aufnahme zumindest eines Führungselements, insbesondere zumindest einer Federschiene, des Wischblatts ausbildet, vorgeschlagen worden.

Konventionelle Wischleisten leiden unter gewissen Bedingungen unter Reibungsinduzierten Vibrationen, was zu Laufgeräuschen führt. Diese Schwingungen können von der Wischleiste auf das gesamte Wischblatt und den Wischerarm oder umgekehrt übertragen werden. Eine Wischleiste nach dem Oberbegriff ist aus der DE 10 2005 059432 A1 bekannt.

Weiterer Stand der Technik ist aus der DE 100 58 455 A1, der US 2016/052491 A1, der US 3 414 930 A und der JP S61 70172 U bekannt geworden.

### Offenbarung der Erfindung

Die Erfindung ist im beigefügten Anspruchssatz beschrieben.

Die Erfindung geht aus von einer Wischleiste für ein Wischblatt, mit zumindest einer Wischlippe, welche zu einem direkten Anliegen an eine Fahrzeugscheibe vorgesehen ist, und mit zumindest einem Grundkörper, der zumindest eine Aufnahmenut zu einer Aufnahme zumindest eines Führungselements, insbesondere zumindest einer Federschiene, des Wischblatts ausbildet. Vorzugsweise weist der Grundkörper zwei Aufnahmenuten zu einer Aufnahme jeweils eines Führungselements auf. Bevorzugt sind die Aufnahmenuten auf gegenüberliegenden Seiten des Grundkörpers angeordnet.

Es wird vorgeschlagen, dass die Wischleiste zumindest ein Kraftumleitelement aufweist, welches zu einer Umleitung einer Kraft des Führungselements vorgesehen ist. Vorzugsweise ist das Kraftumleitungselement dazu vorgesehen, eine Kraft des Führungselements auf die Wischlippe zu übertragen.

Unter einer "Wischleiste" soll in diesem Zusammenhang insbesondere ein Element des Wischblatts aus einem elastischen Material verstanden werden, das dazu vorgesehen ist, mit einer Wischkante einer Wischlippe zu einer Reinigung einer Fläche, insbesondere einer Scheibenfläche, vorzugsweise einer Fahrzeugscheibe eines Kraftfahrzeugs, in einem Funktionskontakt über die zu reinigende Fläche bewegt zu werden. Unter einer "Wischlippe" soll in diesem Zusammenhang insbesondere ein Teilbereich der Wischleiste verstanden werden, der zu einer direkten Kontaktierung einer zu reinigenden Fläche vorgesehen ist. Vorzugsweise ist die Wischlippe dazu vorgesehen, abdichtend an die zu reinigende Fläche anzuliegen. Ferner soll in diesem Zusammenhang unter einem "Grundkörper" insbesondere ein Körper der Wischleiste verstanden werden, der zu einer Befestigung der Wischleiste an einem tragenden Bauteil des Wischblatts vorgesehen ist. Der Grundkörper bildet insbesondere eine Kopfleiste der Wischleiste aus. Es sind verschiedene, einem Fachmann als sinnvoll erscheinende tragende Bauteile des Wischblatts denkbar, wie beispielsweise eine Windabweisereinheit, eine Bügeleinheit und/oder eine Federschiene. Das Führungselement bildet vorzugsweise zumindest ein Element des tragenden Bauteils des Wischblatts. Vorzugsweise ist das Führungselement von einer Federschiene gebildet. Unter einer "Federschiene" soll insbesondere ein makroskopisches Element verstanden werden, das zumindest eine Erstreckung aufweist, die in einem normalen Betriebszustand um zumindest 10 %, insbesondere um wenigstens 20 %, vorzugsweise um mindestens 30 % und besonders vorteilhaft um zumindest 50 % elastisch veränderbar ist, und das insbesondere eine von einer Veränderung der Erstreckung abhängige und vorzugsweise zu der Veränderung proportionale Gegenkraft erzeugt, die der Veränderung entgegenwirkt. Vorzugsweise ist die Federschiene zumindest teilweise aus einem Federstahl ausgebildet. Vorzugsweise weist die Federschiene in einem unbelasteten Zustand im Wesentlichen eine Form eines gebogenen Stabs und besonders vorteilhaft eines abgeflachten gebogenen Stabs auf. Besonders vorteilhaft ist eine Krümmung der Federschiene entlang einer Längserstreckung in einem unbelasteten Zustand größer als eine Krümmung einer Fahrzeugoberfläche eines Kraftfahrzeugs, insbesondere einer Fahrzeugscheibe, über welche die Federschiene in wenigstens einem Betriebszustand geführt wird. Unter einer "Erstreckung" eines Elements soll insbesondere ein maximaler Abstand zweier Punkte einer senkrechten Projektion des Elements auf eine Ebene verstanden werden. Unter einem "makroskopischen Element" soll insbesondere ein Element mit einer Erstreckung von zumindest 1 mm, insbesondere von wenigstens 5 mm und vorzugsweise von mindestens 10 mm verstanden werden. Unter einer "Windabweisereinheit" soll in diesem Zusammenhang insbesondere eine Einheit verstanden werden, die dazu vorgesehen ist, eine auf die Windabweisereinheit und/oder auf ein Wischblatt wirkende Luftanströmung beziehungsweise einen Fahrtwind abzuweisen und/oder für ein Anpressen eines Wischblatts auf eine zu wischende Oberfläche zu nutzen. Vorzugsweise besteht die Windabweisereinheit zumindest teilweise aus Gummi und/oder aus einem wenigstens teilelastischen Kunststoff. Bevorzugt weist die Windabweisereinheit zumindest eine konkave Anströmfläche auf. Die Windabweisereinheit weicht insbesondere von einer Endkappe, einer Wischleiste und/oder von einem Wischblattadapter ab. Vorteilhaft erstreckt sich die Windabweisereinheit in einem Betriebszustand über zumindest einen Großteil einer Längserstreckung eines Wischblatts. Bevorzugt weist die Windabweisereinheit zumindest ein Halteelement zur Befestigung an einer Federschiene und/oder einer Wischleiste auf.

Unter einem "Kraftumleitelement" soll in diesem Zusammenhang insbesondere ein Element verstanden werden, das in zumindest einem Betriebszustand dazu vorgesehen ist, eine von dem Führungselement auf das Element wirkende Kraft in seiner Richtung umzulenken. Vorzugsweise ist das Kraftumleitelement dazu vorgesehen, eine von dem Führungselement übertragene Kraft in Richtung der Wischlippe zu leiten und/oder zu führen. Bevorzugt ist das Kraftumleitelement insbesondere dazu vorgesehen, bei einem Verkippen der Wischleiste eine von dem Führungselement übertragene Kraft auf die Wischlippe umzuleiten und/oder einer Verkippung entgegenzuwirken. Unter "vorgesehen" soll insbesondere speziell ausgelegt und/oder ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt.

Durch die erfindungsgemäße Ausgestaltung der Wischleiste kann ein vorteilhaftes Wischergebnis erreicht werden. Es kann insbesondere eine vorteilhafte Kraftübertragung erreicht werden. Es kann insbesondere ein zu starkes Verkippen der Wischleiste vermieden werden. Insbesondere ist das Kraftumleitelement dazu vorgesehen, mittels einer Federfunktion eine freie Bewegung in der vertikalen Richtung sicher zu stellen und eine von der Struktur kommende Kraft in einen Kontaktdruck an einer einzigen Spitze der Wischlippe umzuwandeln. Hierdurch kann insbesondere eine gute Abdichtung mit der Fahrzeugscheibe erreicht werden.

Ferner wird vorgeschlagen, dass das zumindest eine Kraftumleitelement an die Aufnahmenut angrenzt und dazu vorgesehen ist, eine von dem Führungselement auf die den Grundkörper wirkende Kraft auf die Wischlippe umzuleiten. Vorzugsweise ist das Kraftumleitelement dazu vorgesehen, direkt an das zumindest eine Führungselement anzuliegen. Bevorzugt begrenzt das zumindest eine Kraftumleitelement das Führungselement zu zumindest einer Seite hin. Dadurch kann insbesondere eine vorteilhafte Kraftübertragung auf die Wischlippe erreicht werden. Es kann insbesondere ein zu starkes Verkippen der Wischleiste vermieden werden. Hierdurch kann insbesondere ein vorteilhaftes Wischergebnis erreicht werden. Die Anordnung des Kraftumleitelements in der Nähe des Führungselements ermöglicht es, mögliche reibungsinduzierte Vibrationen zu entkoppeln und die Übertragung der Vibrationen auf ein Wischerblatt und/oder einen Wischerarm oder umgekehrt zu verhindern und so Laufgeräusche zu minimieren. Mittels dem Kraftumleitelement kann eine stabile Position der Kontaktstelle der Wischlippe mit der Fahrzeugscheibe relativ zu einem Drehzentrum der Wischlippe erreicht werden. Mit diesem Konzept mit einer Spitze in Kombination mit einer begrenzten Aufwärts- und Abwärtsbewegung in vertikaler Richtung beim Umklappen werden Aufprall- und Umkehrgeräusche reduziert.

Des Weiteren wird vorgeschlagen, dass die Aufnahmenut dazu vorgesehen ist, das Führungselement mit einem Spiel aufzunehmen, wobei das zumindest eine Kraftumleitelement dazu vorgesehen ist, einer Spielbewegung des Führungselements entgegenzuwirken. Vorzugsweise weist die Aufnahmenut eine Vertikalerstreckung auf, die wesentlich größer ist, als eine Vertikalerstreckung des Führungselements. Bevorzugt weist die Aufnahmenut eine Vertikalerstreckung auf, die zumindest 150%, vorzugsweise zumindest 200% und besonders bevorzugt zumindest 250% einer Vertikalerstreckung des Führungselements entspricht. Bevorzugt begrenzt das zumindest eine Kraftumleitelement das Führungselement zu zumindest einer Seite hin, wobei das Kraftumleitelement abhängig von einer Auslenkung durch das Führungselement eine Gegenkraft aufbaut. Vorzugsweise ist das Kraftumleitelement von einem Federelement gebildet. Unter einer "Vertikalerstreckung" soll in diesem Zusammenhang insbesondere eine Erstreckung in Vertikalrichtung verstanden werden. Dabei soll unter einer "Vertikalrichtung" insbesondere eine Richtung verstanden werden, welche sich senkrecht zu einer Haupterstreckungsrichtung der Wischleiste und parallel zu einer Symmetrieebene der Wischleiste, welche sich durch die Wischlippe und den Grundkörper erstreckt und einen geometrischen Mittelpunkt der Wischleiste schneidet, erstreckt. Unter einer "Haupterstreckungsrichtung" eines Objekts soll dabei insbesondere eine Richtung verstanden werden, welche parallel zu einer längsten Kante eines kleinsten geometrischen Quaders verläuft, welcher das Objekt gerade noch vollständig umschließt. Unter einem "Federelement" soll insbesondere ein makroskopisches Element verstanden werden, das zumindest eine Erstreckung aufweist, die in einem normalen Betriebszustand um zumindest 10%, insbesondere um wenigstens 20%, vorzugsweise um mindestens 30% und besonders vorteilhaft um zumindest 50% elastisch veränderbar ist, und das insbesondere eine von einer Veränderung der Erstreckung abhängige und vorzugsweise zu der Veränderung proportionale Gegenkraft erzeugt, die der Veränderung entgegen wirkt. Unter einer "Erstreckung" eines Elements soll insbesondere ein maximaler Abstand zweier Punkte einer senkrechten Projektion des Elements auf eine Ebene verstanden werden. Unter einem "makroskopischen Element" soll insbesondere ein Element mit einer Erstreckung von zumindest 1 mm, insbesondere von wenigstens 5 mm und vorzugsweise von mindestens 10 mm verstanden werden. Dadurch kann insbesondere vorteilhaft eine von dem Führungselement übertragene Kraft von dem Kraftumleitelement aufgenommen und umgeleitet werden. Es kann insbesondere eine vorteilhaft flexible Aufnahme des Führungselements erreicht werden. Es kann insbesondere eine gute Abdichtung an jeder Stelle der Fahrzeugscheibe erreicht werden, weil die von dem Führungselement kommende Kraft in einen Kontaktdruck an der Wischkante der Wischlippe mit der Fahrzeugscheibe umgewandelt wird. Das zumindest eine Kraftumleitelement nivelliert insbesondere die Strukturkraft entlang der Länge der Wischleiste und ermöglicht die notwendige freie Bewegung in der vertikalen Richtung. Ferner können dadurch gezielt Umkehrgeräusche gering gehalten werden, da das Dichtelement nur eine Wischkante aufweist, also keine Verschiebung von einer Wischkante zur anderen Wischkante an den Umkehrpunkten erfolgt, was zu einem Aufprall auf die Windschutzscheibe und damit zu Umkehrgeräuschen führen würde. Es wird insbesondere eine begrenzte Aufwärts- und Abwärtsbewegung in der vertikalen Richtung während des Umklappens des Balkens und somit des vollständigen Wischerblatts bewirkt, was wiederum Aufprall- und Umkehrgeräusche reduziert. Ferner können geringe Laufgeräusche ermöglicht werden, da die Übertragung von reibungsbedingten Vibrationen gezielt vermieden werden kann. Des Weiteren kann eine stabile Position des Kontaktpunktes der Wischleiste mit der Fahrzeugscheibe relativ zum Drehpunkt des Dichtelements erzeugt werden.

Es wird ferner vorgeschlagen, dass das Kraftumleitelement von einem Steg gebildet ist, welcher mit einem freien Ende in die Aufnahmenut ragt. Vorzugsweise weist der Steg eine Haupterstreckungsrichtung auf, welche sich parallel zu einer Haupterstreckungsrichtung der Wischleiste erstreckt. Bevorzugt ist das Kraftumleitelement an einer Außenkante der Aufnahmenut mit dem Grundkörper der Wischleiste verbunden. Unter einem "Steg" soll in diesem Zusammenhang insbesondere ein Fortsatz verstanden werden, welcher entlang einer Kante, welche sich parallel zu der Haupterstreckungsrichtung erstreckt, mit einem weiteren Element, insbesondere dem Grundkörper verbunden ist. Bevorzugt soll darunter insbesondere ein Fortsatz verstanden werden, welche senkrecht zu der Haupterstreckungsrichtung auskragt. Dadurch kann ein vorteilhaftes Kraftumleitelement bereitgestellt werden. Es kann insbesondere eine vorteilhafte Umleitung einer Kraft des Führungselements erreicht werden.

Es wird weiter vorgeschlagen, dass das Kraftumleitelement von einem in der Aufnahmenut angeordneten Steg gebildet ist, welcher mit einem freien Ende aus der Aufnahmenut ragt. Vorzugsweise weist der Steg eine Haupterstreckungsrichtung auf, welche sich parallel zu einer Haupterstreckungsrichtung der Wischleiste erstreckt. Bevorzugt ist das Kraftumleitelement in der Aufnahmenut mit dem Grundkörper der Wischleiste verbunden. Dadurch kann ein vorteilhaftes Kraftumleitelement bereitgestellt werden. Es kann insbesondere eine vorteilhafte Umleitung einer Kraft des Führungselements erreicht werden.

Zudem wird vorgeschlagen, dass das Kraftumleitelement auf einer der Wischlippe zugewandten Seite der Aufnahmenut mit dem Grundkörper verbunden ist. Vorzugsweise ist das Kraftumleitelement in einem montierten Zustand auf einer der Wischlippe zugewandten Seite des Führungselements angeordnet. Dadurch kann insbesondere vorteilhaft eine von dem Führungselement übertragene Kraft von dem Kraftumleitelement aufgenommen und auf die Wischlippe umgeleitet werden. Ferner kann eine Bauhöhe der Wischleiste oberhalb des Führungselements gering gehalten werden.

Ferner wird vorgeschlagen, dass das Kraftumleitelement in einem entspannten Zustand gegenüber einer Symmetrieebene der Wischleiste abgewinkelt in die Aufnahmenut ragt. Die Symmetrieebene erstreckt sich insbesondere parallel zu einer Haupterstreckungsrichtung der Wischleiste durch die Wischlippe und den Grundkörper und schneidet einen geometrischen Mittelpunkt der Wischleiste. Vorzugsweise schließen die Symmetrieebene und das Kraftumleitelement, insbesondere eine Haupterstreckungsebene des Kraftumleitelements, einen kleinsten Winkel, insbesondere einen Schnittwinkel, von zumindest 20°, vorzugsweise von zumindest 40° und besonders bevorzugt von zumindest 60°, und maximal 80°, vorzugsweise maximal 70° ein. Unter einer "Haupterstreckungsebene" einer Baueinheit soll insbesondere eine Ebene verstanden werden, welche parallel zu einer größten Seitenfläche eines kleinsten gedachten Quaders ist, welcher die Baueinheit gerade noch vollständig umschließt, und insbesondere durch den Mittelpunkt des Quaders verläuft. Dadurch kann insbesondere vorteilhaft eine von dem Führungselement übertragene Kraft von dem Kraftumleitelement aufgenommen und auf die Wischlippe umgeleitet werden.

Des Weiteren wird vorgeschlagen, dass das Kraftumleitelement von einem die Aufnahmenut zumindest im Wesentlichen ausfüllenden Dämpfungskörper gebildet ist. Vorzugsweise ist ein Wesentlicher Teil eines Volumens der Aufnahmenut von dem Kraftumleitelement ausgefüllt. Unter einem "Wesentlichen Teil" soll in diesem Zusammenhang insbesondere zumindest 20%, vorzugsweise zumindest 40% und besonders bevorzugt zumindest 60% eines Volumens verstanden werden. Dadurch kann insbesondere vorteilhaft eine von dem Führungselement übertragene Kraft von dem Kraftumleitelement aufgenommen und auf die Wischlippe umgeleitet werden. Ferner kann dadurch vorteilhaft eine Verschmutzung der Aufnahmenut und eine damit verbundene Funktionseinschränkung des Kraftumleitelements vermieden werden.

Es wird ferner vorgeschlagen, dass das von einem Dämpfungskörper gebildete Kraftumleitelement aus einem von dem Grundkörper differierenden Material gebildet ist. Vorzugsweise ist der Dämpfungskörper aus einem gegenüber dem Grundkörper weicheren und/oder elastischeren Material. Bevorzugt besteht das Kraftumleitelement aus einem Elastomer. Dadurch kann insbesondere eine vorteilhafte Dämpfungseigenschaft bereitgestellt werden. Ferner kann dadurch zuverlässig eine gezielte Kraftumleitung realisiert werden. Es kann insbesondere gezielt durch eine Materialauswahl eine Kraftumleitung eingestellt werden.

Es wird weiter vorgeschlagen, dass das Kraftumleitelement einstückig mit dem Grundkörper ausgebildet ist. Unter "einstückig" soll insbesondere zumindest stoffschlüssig verbunden verstanden werden, beispielsweise durch einen Schweißprozess, einen Klebeprozess, einen Anspritzprozess und/oder einen anderen, dem Fachmann als sinnvoll erscheinenden Prozess, und/oder vorteilhaft in einem Stück geformt verstanden werden, wie beispielsweise durch eine Herstellung aus einem Guss und/oder durch eine Herstellung in einem Ein- oder Mehrkomponentenspritzverfahren und vorteilhaft aus einem einzelnen Rohling. Dadurch kann insbesondere eine Anzahl von Bauteilen gering gehalten werden. Es kann insbesondere eine Herstellung der Wischleiste in einem Extrusions- oder Strangpressverfahren ermöglicht werden.

Ferner schlägt die Erfindung ein Wischblatt mit der Wischleiste vor.

Die erfindungsgemäße Wischleiste sowie das Wischblatt sollen hierbei nicht auf die oben beschriebene Anwendung und Ausführungsform beschränkt sein. Insbesondere können die erfindungsgemäße Wischleiste sowie das Wischblatt zu einer Erfüllung einer hierin beschriebenen Funktionsweise eine von einer hierin genannten Anzahl von einzelnen Elementen, Bauteilen und Einheiten abweichende Anzahl aufweisen. Zudem sollen bei den in dieser Offenbarung angegebenen Wertebereichen auch innerhalb der genannten Grenzen liegende Werte als offenbart und als beliebig einsetzbar gelten.

### Zeichnung

Weitere Vorteile ergeben sich aus der folgenden Zeichnungsbeschreibung. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: ein Wischblatt mit einer Wischblattadaptereinheit, mit einer Windabweisereinheit, mit zwei Führungselementen und mit einer Wischleiste in einer schematischen Darstellung,
- Fig. 2A: die Wischleiste und die Führungselemente in einem Ruhezustand in einer schematischen Schnittdarstellung,
- Fig. 2B: die Wischleiste und die Führungselemente in einem ersten Belastungszustand in einer schematischen Schnittdarstellung,
- Fig. 2C: die Wischleiste und die Führungselemente in einem zweiten Belastungszustand in einer schematischen Schnittdarstellung,
- Fig. 3A: eine alternative Wischleiste und die Führungselemente in einem Ruhezustand in einer schematischen Schnittdarstellung,
- Fig. 3B: die alternative Wischleiste und die Führungselemente in einem ersten Belastungszustand in einer schematischen Schnittdarstellung,
- Fig. 3C: die alternative Wischleiste und die Führungselemente in einem zweiten Belastungszustand in einer schematischen Schnittdarstellung,
- Fig. 4A: eine weitere alternative Wischleiste und die Führungselemente in einem Ruhezustand in einer schematischen Schnittdarstellung,
- Fig. 4B: die weitere alternative Wischleiste und die Führungselemente in einem zweiten Belastungszustand in einer schematischen Schnittdarstellung,
- Fig. 5A: eine weitere alternative Wischleiste und die Führungselemente in einem Ruhezustand in einer schematischen Schnittdarstellung,
- Fig. 5B: die weitere alternative Wischleiste und die Führungselemente in einem zweiten Belastungszustand in einer schematischen Schnittdarstellung,
- Fig. 6A: eine erfindungsgemäße Wischleiste und die Führungselemente in einem Ruhezustand in einer schematischen Schnittdarstellung,
- Fig. 6B: die weitere alternative erfindungsgemäße Wischleiste und die Führungselemente in einem zweiten Belastungszustand in einer schematischen Schnittdarstellung,
- Fig. 7A: eine weitere alternative erfindungsgemäße Wischleiste und die Führungselemente in einem Ruhezustand in einer schematischen Schnittdarstellung und
- Fig. 7B: die weitere alternative erfindungsgemäße Wischleiste und die Führungselemente in einem zweiten Belastungszustand in einer schematischen Schnittdarstellung.

### Beschreibung der Ausführungsbeispiele

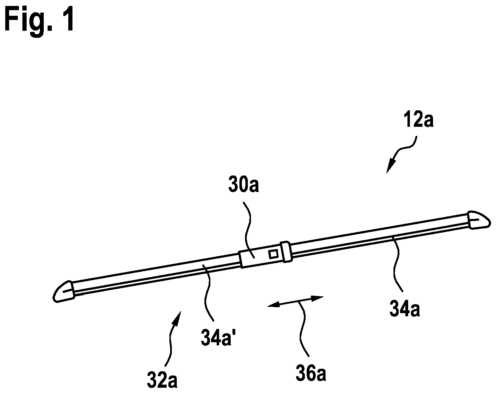

Figur 1 zeigt ein Wischblatt 12a mit einer Wischleiste 10a. Die Wischleiste 10a ist für das Wischblatt 12a. Ferner weist das Wischblatt 12a einen Wischblattadapter 30a, eine Windabweisereinheit 32a und zwei Führungselemente 22a, 22a' auf. Der Wischblattadapter 30a ist dazu vorgesehen, das Wischblatt 12a mit einem nicht weiter sichtbaren Wischarm zu verbinden. Der Wischblattadapter 30a ist dazu vorgesehen, direkt mit einem nicht weiter sichtbaren Wischarmadapter des nicht weiter sichtbaren Wischarms verbunden zu werden. Der Wischblattadapter 30a ist teilweise auf der Windabweisereinheit 32a angeordnet. Die Windabweisereinheit 32a ist dazu vorgesehen, in einem an einem nicht weiter sichtbaren Kraftfahrzeug montierten Zustand einen auf das Wischblatt 12a einwirkenden Fahrtwind abzuweisen. Ferner ist die Windabweisereinheit 32a dazu vorgesehen, einen Fahrtwind umzuleiten und eine daraus resultierende Kraft zu einer Erhöhung eines Anpressdrucks des Wischblatts 12a auf einer Fahrzeugscheibe 16a des nicht weiter sichtbaren Kraftfahrzeugs zu erhöhen. Die Windabweisereinheit 32a des Wischblatts 12a ist zweiteilig ausgebildet. Die Windabweisereinheit 32a besteht aus zwei Windabweiserelementen 34a, 34a'. Die zwei Windabweiserelemente 34a, 34a' sind auf gegenüberliegenden Seiten des Wischblattadapters 30a angeordnet. Die zwei Führungselemente 22a, 22a' sind jeweils von einer Federschiene gebildet. Die Wischleiste 10a ist über die zwei Führungselemente 22a, 22a' in der Windabweisereinheit 32a gehalten. Die zwei Führungselemente 22a, 22a' sind dazu jeweils in einer Aufnahmenut 20a; 20a' der Wischleiste 10a geführt und werden von außen von der Windabweisereinheit 32a umgriffen. Die zwei Führungselemente 22a, 22a' sind ferner, entlang ihrer Haupterstreckungsrichtung betrachtet, jeweils in ihrer Mitte nicht weiter sichtbar fest mit dem Wischblattadapter 30a verbunden. Die Haupterstreckungsrichtung der Führungselemente 22a, 22a' entspricht einer Haupterstreckungsrichtung des Wischblatts und einer Haupterstreckungsrichtung 36a der Wischleiste 10a.

Die Wischleiste 10a ist von einem länglichen Körper gebildet, der über seine Länge einen annähernd gleichbleibenden Querschnitt aufweist. Die Wischleiste 10a ist in einem Extrusionsverfahren hergestellt. Grundsätzlich wäre jedoch auch ein anderes, einem Fachmann als sinnvoll erscheinendes Herstellungsverfahren denkbar. Die Wischleiste 10a besteht im Wesentlichen aus Kautschuk. Grundsätzlich sind jedoch auch andere, einem Fachmann als sinnvoll erscheinende Materialien denkbar. Die Wischleiste 10a weist eine Wischlippe 14a auf. Die Wischlippe 14a ist zu einem direkten Anliegen an der Fahrzeugscheibe 16a vorgesehen. Die Wischlippe 14a weist einen annähernd dreieckigen Querschnitt auf, wobei eine freie untere Kante eine Wischkante 38a ausbildet. Die Wischlippe 14a weist in einer Ebene senkrecht zu einer Haupterstreckungsrichtung 36a der Wischleiste 10a einen annähernd dreieckigen Querschnitt auf. Ferner weist die Wischleiste 10a einen Grundkörper 18a auf. Der Grundkörper 18a weist eine Kopfleiste 46a der Wischleiste 10a auf. Der Grundkörper 18a weist eine annähernd quaderförmige Grundform auf. Die Wischlippe 14a ist fest mit dem Grundkörper 18a verbunden. Die Wischlippe 14a ist über einen schmalen Steg 40a des Grundkörpers 18a mit der Kopfleiste 46a des Grundkörpers 18a verbunden. Die Wischlippe 14a ist auf einer der Wischkante 38a abgewandten Seite über den schmalen Steg 40a mit der Kopfleiste 46a des Grundkörpers 18a verbunden. Die Wischlippe 14a ist durch den Steg 40a gegenüber der Kopfleiste 46a verkippbar.

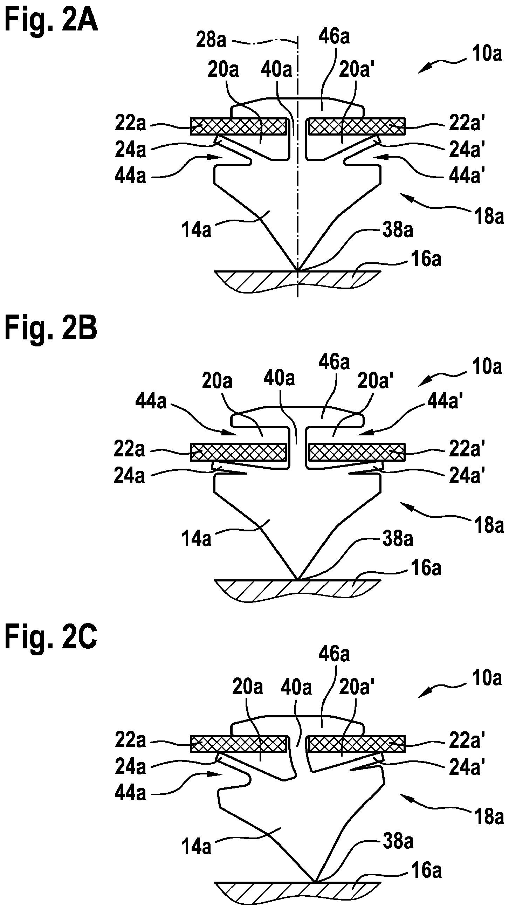

Die Wischlippe 14a, die Kopfleiste 46a und der Steg 40a erstrecken sich, entlang der Haupterstreckungsrichtung 36a der Wischleiste 10a betrachtet, über eine gesamte Erstreckung der Wischleiste 10a. Die Wischleiste 10a weist einen gleichbleibenden Querschnitt auf (Fig. 2A).

Der Grundkörper 18a bildet zumindest eine Aufnahmenut 20a, 20a' zu einer Aufnahme zumindest eines Führungselements 22a, 22a' des Wischblatts 12a aus. Der Grundkörper 18a bildet zwei Aufnahmenuten 20a, 20a' aus, die jeweils zu einer Aufnahme einer der Führungselemente 22a, 22a' des Wischblatts 12a vorgesehen sind. Die Aufnahmenuten 20a, 20a' erstrecken sich entlang der Haupterstreckungsrichtung 36a der Wischleiste 10a über eine gesamte Erstreckung des Grundkörpers 18a. Die Aufnahmenuten 20a, 20a' weisen einen rechteckigen Querschnitt auf und sind jeweils zu drei Seiten materiell durch den Grundkörper 18a begrenzt. Die Aufnahmenuten 20a, 20a' weisen jeweils eine Öffnung 44a, 44a' auf, über welche die Aufnahmenuten 20a, 20a' jeweils zu einer Seite hin, welche sich parallel zu der Haupterstreckungsrichtung 36a der Wischleiste 10a erstreckt, geöffnet sind. Die Aufnahmenuten 20a, 20a' sind jeweils auf gegenüberliegenden Seiten des Grundkörpers 18a angeordnet. Die Aufnahmenuten 20a, 20a' sind jeweils relativ zu einer Symmetrieebene 28a der Wischleiste 10a, welche sich parallel zu der Haupterstreckungsrichtung 36a der Wischleiste 10a und insbesondere senkrecht zu der Fahrzeugscheibe 16a erstreckt, auf gegenüberliegenden Seiten des Grundkörpers 18a angeordnet. Die Öffnungen 44a, 44a' der Aufnahmenuten 20a, 20a' weisen jeweils in entgegengesetzte Richtungen. Über die Öffnungen 44a, 44a' können jeweils die Führungselemente 22a, 22a' in die Aufnahmenuten 20a, 20a' eingeschoben werden. In einem montierten Zustand der Führungselemente 22a, 22a' ragen die Führungselemente 22a, 22a' teilweise über die Öffnungen 44a, 44a' aus den Aufnahmenuten 20a, 20a' (Fig. 2A).

Die Aufnahmenuten 20a, 20a' sind jeweils dazu vorgesehen, das jeweils zugeordnete Führungselement 22a, 22a' mit einem Spiel aufzunehmen. Die Aufnahmenuten 20a, 20a' weisen eine Vertikalerstreckung auf, die wesentlich größer ist, als eine Vertikalerstreckung der Führungselemente 22a, 22a'. Die Aufnahmenuten 20a, 20a' weisen eine Vertikalerstreckung auf, die annähernd 250% einer Vertikalerstreckung der Führungselemente 22a, 22a' entspricht (Fig. 2A).

Ferner weist die Wischleiste 10a zumindest ein Kraftumleitelement 24a, 24a' auf, welches zu einer Umleitung einer Kraft zumindest eines Führungselements 22a, 22a' vorgesehen ist. Die Wischleiste 10a weist zwei Kraftumleitelemente 24a, 24a' auf, welche jeweils zu einer Umleitung einer Kraft eines der Führungselemente 22a, 22a' vorgesehen ist. Die Kraftumleitelemente 24a, 24a' sind dazu vorgesehen eine von den Führungselementen 22a, 22a' auf die Wischleiste 10a übertragene Kraft auf die Wischlippe 14a zu übertragen. Mittels den Führungselementen 22a, 22a' wird sowohl eine Anpresskraft, als auch eine Schwenkbewegung auf die Wischleiste 10a übertragen, wobei die Kraftumleitelemente 24a, 24a' dazu vorgesehen sind, diese Kräfte auf die Wischlippe 14a zu übertragen. Die Kraftumleitelemente 24a, 24a' grenzen an jeweils eine Aufnahmenut 20a, 20a' an und sind dazu vorgesehen, eine von den Führungselementen 22a, 22a' auf den Grundkörper 18a wirkende Kraft auf die Wischlippe 14a umzuleiten. Die Kraftumleitelemente 24a, 24a' sind hierbei dazu vorgesehen, direkt an jeweils eines der Führungselemente 22a, 22a' anzuliegen. Die Kraftumleitelemente 24a, 24a' begrenzen jeweils eines der Führungselemente 22a, 22a' zu einer Seite hin. Die Kraftumleitelemente 24a, 24a' sind jeweils auf einer der Wischlippe 14a zugewandten Seite der Führungselemente 22a, 22a' angeordnet. Die Kraftumleitelemente 24a, 24a' sind dazu vorgesehen, einer durch die Aufnahme in den Aufnahmenuten 20a, 20a' mit einem Spiel entstehenden Spielbewegung der Führungselemente 22a, 22a' entgegenzuwirken. Die Kraftumleitelemente 24a, 24a' sind hierbei dazu vorgesehen, einen Druck auf die Führungselemente 22a, 22a' auszuüben (Fig. 2A, 2B, 2C).

Die Kraftumleitelemente 24a, 24a' wandeln die von dem Wischarm kommende Kraft in einen Kontaktdruck an der Spitze der Wischkante 38a der Wischlippe 14a mit der Fahrzeugscheibe 16a um, um eine gute Dichtungsleistung zu erhalten. Die Verteilung der von dem Wischarm kommenden Kraft entlang der Länge der Wischleiste 10a und das Ermöglichen der notwendigen freien Bewegung in der vertikalen Richtung ist eine wichtige Voraussetzung für eine gute Dichtungsleistung an jeder Stelle der Fahrzeugscheibe 16a. Eine niedrige Federsteifigkeit bewirkt eine gleichmäßigere Kraftverteilung entlang der Länge und wird eine bessere Anpassung an Fensteroberflächenkrümmungen erreichen. Mit diesem Konzept wird eine freie Bewegung in vertikaler Richtung und eine geringe Federkonstante erreicht (Fig. 2A, 2B, 2C).

Die Kraftumleitelemente 24a, 24a' sind jeweils von einem Steg gebildet. Die Kraftumleitelemente 24a, 24a' sind jeweils von einem lamellenartigen Steg gebildet. Die Kraftumleitelemente 24a, 24a' erstrecken sich jeweils entlang der Haupterstreckungsrichtung 36a der Wischleiste 10a über eine gesamte Erstreckung der Wischleiste 10a. Die Kraftumleitelemente 24a, 24a' weisen jeweils entlang der Haupterstreckungsrichtung 36a der Wischleiste 10a einen gleichbleibenden Querschnitt auf. Die Kraftumleitelemente 24a, 24a' sind jeweils von einem in einer der Aufnahmenuten 20a, 20a' angeordneten Steg gebildet, welcher mit einem freien Ende aus der Aufnahmenut 20a, 20a' ragt. In jeder der Aufnahmenuten 20a, 20a' ist jeweils ein Kraftumleitelement 24a, 24a' angeordnet. Die Kraftumleitelemente 24a, 24a' ragen jeweils aus der jeweiligen Aufnahmenut 20a, 20a' durch die jeweilige Öffnung 44a, 44a'. Die Kraftumleitelemente 24a, 24a' ragen jeweils mit einem freien Ende aus der jeweiligen Aufnahmenut 20a, 20a' durch die jeweilige Öffnung 44a, 44a'. Mit einem festen Ende sind die Kraftumleitelemente 24a, 24a' jeweils in der jeweils zugeordneten Aufnahmenut 20a, 20a' mit dem Grundkörper 18a verbunden. Die Kraftumleitelemente 24a, 24a' sind jeweils auf einer der Wischlippe 14a zugewandten Seite der Aufnahmenut 20a, 20a' mit dem Grundkörper 18a verbunden. Die Kraftumleitelemente 24a, 24a' sind einstückig mit dem Grundkörper 18a ausgebildet (Fig. 2A, 2B, 2C).

In einem entspannten Zustand ragen die Kraftumleitelemente 24a, 24a' jeweils gegenüber der Symmetrieebene 28a der Wischleiste 10a abgewinkelt in die jeweils zugeordnete Aufnahmenut 20a, 20a'. Die Symmetrieebene 28a erstreckt sich parallel zu der Haupterstreckungsrichtung 36a der Wischleiste 10a durch die Wischlippe 14a und den Grundkörper 18a und schneidet einen geometrischen Mittelpunkt der Wischleiste 10a. Die Symmetrieebene 28a und die Haupterstreckungsebenen der Kraftumleitelemente 24a, 24a' schließen jeweils einen kleinsten Winkel, insbesondere einen Schnittwinkel, von zumindest 20°, vorzugsweise von zumindest 40° und besonders bevorzugt von zumindest 60°, und maximal 80°, vorzugsweise maximal 70° ein. Die Symmetrieebene 28a und die Haupterstreckungsebenen eines ersten Kraftumleitelements 24a, sowie die Symmetrieebene 28a und die Haupterstreckungsebenen eines zweiten Kraftumleitelements 24a' schließen jeweils einen Schnittwinkel von annähernd 65° ein. Grundsätzlich wäre jedoch auch ein anderer, einem Fachmann als sinnvoll erscheinender Schnittwinkel denkbar. Der Schnittwinkel ist zumindest von 0° und von 90° wesentlich, also insbesondere um zumindest 5°, vorzugsweise um zumindest 10° und besonders bevorzugt um zumindest 15° verschieden (Fig. 2A, 2B, 2C).

Während eines Betriebs kann sich zumindest eines der Kraftumleitelemente 24a, 24a' aus der jeweiligen Aufnahmenut 20a, 20a' heraus biegen, sodass eine übertragene Kraft entlang der Haupterstreckungsrichtung 36a der Wischleiste 10a nivelliert und eine notwendige freie Bewegung in vertikaler Richtung ermöglicht wird (Figur 2C). Ferner kann durch die Kraftumleitelemente 24a, 24a' ein vorteilhaftes vertikales Bewegungsspiel der Führungselemente 22a, 22a' relativ zu der Wischleiste 10a erreicht werden (Fig. 2B). Hierdurch kann wiederum eine wirkende Normalkraft über die gesamte Länge der Wischleiste 10a konstant gehalten werden, wodurch ein vorteilhaftes Wischergebnis erreicht werden kann.

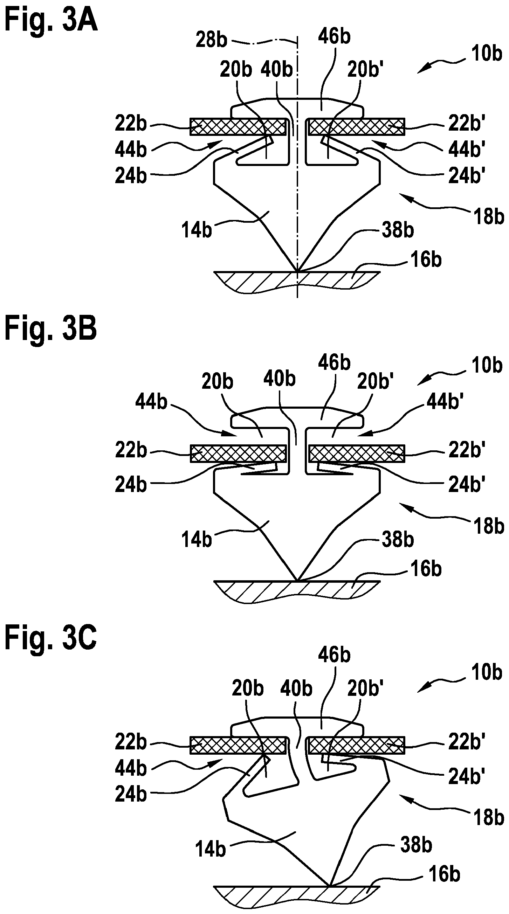

In den Figuren 3 bis 7 sind fünf weitere Ausführungsbeispiele der Erfindung gezeigt. Die nachfolgenden Beschreibungen und die Zeichnungen beschränken sich im Wesentlichen auf die Unterschiede zwischen den Ausführungsbeispielen, wobei bezüglich gleich bezeichneter Bauteile, insbesondere in Bezug auf Bauteile mit gleichen Bezugszeichen, grundsätzlich auch auf die Zeichnungen und/oder die Beschreibung der anderen Ausführungsbeispiele, insbesondere der Figuren 1 und 2, verwiesen werden kann. Zur Unterscheidung der Ausführungsbeispiele ist der Buchstabe a den Bezugszeichen des Ausführungsbeispiels in den Figuren 1 und 2 nachgestellt. In den Ausführungsbeispielen der Figuren 3 bis 7 ist der Buchstabe a durch die Buchstaben b bis f ersetzt.

Die Figuren 3A, 3B und 3C zeigen eine Wischleiste 10b und zwei Führungselemente 22b, 22b' in verschiedenen Zuständen. Die Wischleiste 10b weist eine Wischlippe 14b und einen Grundkörper 18b auf. Der Grundkörper 18b bildet zwei Aufnahmenuten 20b, 20b' aus, die jeweils zu einer Aufnahme einer der Führungselemente 22b, 22b' des Wischblatts 12b vorgesehen sind.

Ferner weist die Wischleiste 10b zwei Kraftumleitelemente 24b, 24b' auf, welche jeweils zu einer Umleitung einer Kraft eines der Führungselemente 22b, 22b' vorgesehen sind. Die Kraftumleitelemente 24b, 24b' sind jeweils von einem Steg gebildet. Die Kraftumleitelemente 24b, 24b' sind jeweils von einem lamellenartigen Steg gebildet. Die Kraftumleitelemente 24b, 24b' erstrecken sich jeweils entlang einer Haupterstreckungsrichtung 36b der Wischleiste 10b über eine gesamte Erstreckung der Wischleiste 10b. Die Kraftumleitelemente 24b, 24b' sind jeweils von einem an der Aufnahmenut 20b, 20b' angeordneten Steg gebildet, welcher mit einem freien Ende in die Aufnahmenut 20b, 20b' ragt. Die Kraftumleitelemente 24b, 24b' sind einstückig mit dem Grundkörper 18b ausgebildet (Fig. 2A, 2B, 2C).

In einem entspannten Zustand ragen die Kraftumleitelemente 24b, 24a' jeweils gegenüber der Symmetrieebene 28b der Wischleiste 10b abgewinkelt in die jeweils zugeordnete Aufnahmenut 20b, 20b'. Die Symmetrieebene 28b erstreckt sich parallel zu der Haupterstreckungsrichtung 36b der Wischleiste 10b durch die Wischlippe 14b und den Grundkörper 18b und schneidet einen geometrischen Mittelpunkt der Wischleiste 10b. Die Symmetrieebene 28b und die Haupterstreckungsebenen der Kraftumleitelemente 24b, 24b' schließen jeweils einen kleinsten Winkel, insbesondere einen Schnittwinkel, von zumindest 20°, vorzugsweise von zumindest 40° und besonders bevorzugt von zumindest 60°, und maximal 80°, vorzugsweise maximal 70° ein. Die Symmetrieebene 28b und die Haupterstreckungsebenen eines ersten Kraftumleitelements 24b, sowie die Symmetrieebene 28b und die Haupterstreckungsebenen eines zweiten Kraftumleitelements 24b' schließen jeweils einen Schnittwinkel von annähernd 65° ein. Grundsätzlich wäre jedoch auch ein anderer, einem Fachmann als sinnvoll erscheinender Schnittwinkel denkbar. Der Schnittwinkel ist zumindest von 0° und von 90° wesentlich, also insbesondere um zumindest 5°, vorzugsweise um zumindest 10° und besonders bevorzugt um zumindest 15° verschieden.

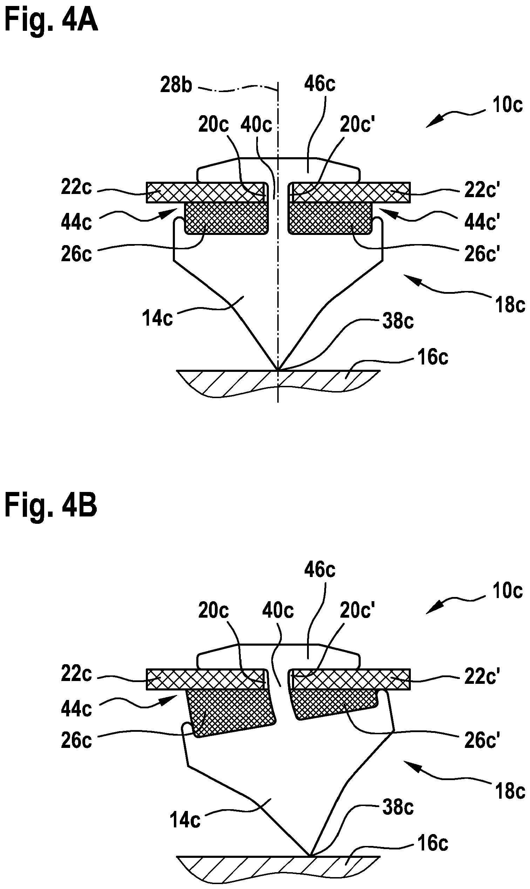

Die Figuren 4A, 4B und 4C zeigen eine Wischleiste 10c und zwei Führungselemente 22c, 22c' in verschiedenen Zuständen. Die Wischleiste 10c weist eine Wischlippe 14c und einen Grundkörper 18c auf. Der Grundkörper 18c bildet zwei Aufnahmenuten 20c, 20c' aus, die jeweils zu einer Aufnahme einer der Führungselemente 22c, 22c' des Wischblatts 12c vorgesehen sind.

Ferner weist die Wischleiste 10c zwei Kraftumleitelemente 26c, 26c' auf, welche jeweils zu einer Umleitung einer Kraft eines der Führungselemente 22c, 22c' vorgesehen sind. Die Kraftumleitelemente 26c, 26c' sind von die Aufnahmenut 20c, 20c' zumindest im Wesentlichen ausfüllenden Dämpfungskörpern gebildet. Die Kraftumleitelemente 26c, 26c' erstrecken sich jeweils entlang der Haupterstreckungsrichtung 36c der Wischleiste 10c über eine gesamte Erstreckung der Wischleiste 10c. Die jeweils von einem Dämpfungskörper gebildeten Kraftumleitelemente 26c, 26c' sind aus einem von dem Grundkörper 18c differierenden Material gebildet ist. Die jeweils von einem Dämpfungskörper gebildeten Kraftumleitelemente 26c, 26c' sind aus einem gegenüber dem Grundkörper 18c weicheren Material. Die Kraftumleitelemente 26c, 26c' sind jeweils von einem quaderförmigen Dämpfungskörper gebildet, der vollständig auf einer der Wischlippe 14a zugewandten Seite der Führungselemente 22c, 22c' in der Aufnahmenut 20c, 20c' angeordnet ist. Die Kraftumleitelemente 26c, 26c' und die Führungselemente 22c, 22c' füllen gemeinsam die Aufnahmenuten 20c, 20c' im Wesentlichen aus.

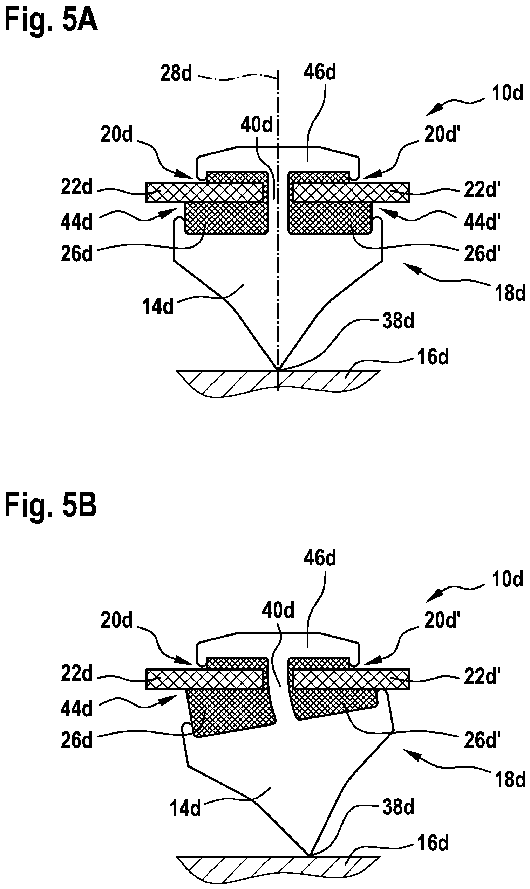

Die Figuren 5A, 5B und 5C zeigen eine Wischleiste 10d und zwei Führungselemente 22d, 22d' in verschiedenen Zuständen. Die Wischleiste 10d weist eine Wischlippe 14d und einen Grundkörper 18d auf. Der Grundkörper 18d bildet zwei Aufnahmenuten 20d, 20d' aus, die jeweils zu einer Aufnahme einer der Führungselemente 22d, 22d' des Wischblatts 12d vorgesehen sind.

Ferner weist die Wischleiste 10d zwei Kraftumleitelemente 26d, 26d' auf, welche jeweils zu einer Umleitung einer Kraft eines der Führungselemente 22d, 22d' vorgesehen sind. Die Kraftumleitelemente 26d, 26d' sind von die Aufnahmenut 20d, 20d' zumindest im Wesentlichen ausfüllenden Dämpfungskörpern gebildet. Die Kraftumleitelemente 26d, 26d' erstrecken sich jeweils entlang der Haupterstreckungsrichtung 36d der Wischleiste 10d über eine gesamte Erstreckung der Wischleiste 10d. Die jeweils von einem Dämpfungskörper gebildeten Kraftumleitelemente 26d, 26d' sind aus einem von dem Grundkörper 18d differierenden Material gebildet. Die jeweils von einem Dämpfungskörper gebildeten Kraftumleitelemente 26d, 26d' sind aus einem gegenüber dem Grundkörper 18d weicheren Material. Die Kraftumleitelemente 26d, 26d' sind jeweils von einem Dämpfungskörper gebildet, der im Wesentlichen auf einer der Wischlippe 14a zugewandten Seite der Führungselemente 22d, 22d' in der Aufnahmenut 20d, 20d' angeordnet ist. Die Kraftumleitelemente 26d, 26d' umgreifen die Führungselemente 22d, 22d' in der Aufnahmenut 20d, 20d'. Die Kraftumleitelemente 26d, 26d' und die Führungselemente 22d, 22d' füllen gemeinsam die Aufnahmenuten 20d, 20d' vollständig aus.

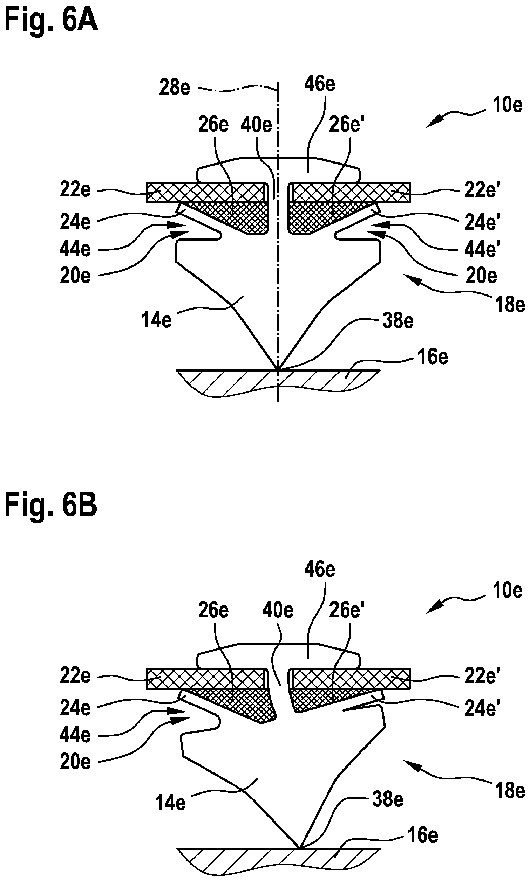

Die Figuren 6A, 6B und 6C zeigen eine erfindungsgemäße Wischleiste 10e und zwei Führungselemente 22e, 22e' in verschiedenen Zuständen. Die Wischleiste 10e weist eine Wischlippe 14e und einen Grundkörper 18e auf. Der Grundkörper 18e bildet zwei Aufnahmenuten 20e, 20e' aus, die jeweils zu einer Aufnahme einer der Führungselemente 22e, 22e' des Wischblatts 12e vorgesehen sind.

Ferner weist die Wischleiste 10e vier Kraftumleitelemente 24e, 24e', 26e, 26e' auf, welche jeweils zu einer Umleitung einer Kraft eines der Führungselemente 22e, 22e' vorgesehen sind.

Ein erstes und zweites Kraftumleitelement 24e, 24e' ist jeweils von einem Steg gebildet. Die ersten zwei Kraftumleitelemente 24e, 24e' sind jeweils von einem lamellenartigen Steg gebildet. Die ersten zwei Kraftumleitelemente 24e, 24e' sind jeweils auf einer der Wischlippe 14e zugewandten Seite der Führungselemente 22e, 22e' angeordnet. Die ersten zwei Kraftumleitelemente 24e, 24e' erstrecken sich jeweils entlang der Haupterstreckungsrichtung 36e der Wischleiste 10e über eine gesamte Erstreckung der Wischleiste 10e. Die ersten zwei Kraftumleitelemente 24e, 24e' weisen jeweils entlang der Haupterstreckungsrichtung 36e der Wischleiste 10e einen gleichbleibenden Querschnitt auf. Die ersten zwei Kraftumleitelemente 24e, 24e' sind jeweils von einem in einer der Aufnahmenuten 20e, 20e' angeordneten Steg gebildet, welcher mit einem freien Ende aus der Aufnahmenut 20e, 20e' ragt. In jeder der Aufnahmenuten 20e, 20e' ist jeweils eines der ersten zwei Kraftumleitelemente 24e, 24e' angeordnet. Die ersten zwei Kraftumleitelemente 24e, 24e' ragen jeweils aus der jeweiligen Aufnahmenut 20e, 20a' durch die jeweilige Öffnung 44e, 44e'. Die ersten zwei Kraftumleitelemente 24e, 24e' sind jeweils auf einer der Wischlippe 14e zugewandten Seite der Aufnahmenut 20e, 20e' mit dem Grundkörper 18e verbunden. Die ersten zwei Kraftumleitelemente 24e, 24e' sind einstückig mit dem Grundkörper 18e ausgebildet.

In einem entspannten Zustand ragen die ersten zwei Kraftumleitelemente 24e, 24e' jeweils gegenüber einer Symmetrieebene 28e der Wischleiste 10e abgewinkelt in die jeweils zugeordnete Aufnahmenut 20e, 20e'. Die Symmetrieebene 28e und die Haupterstreckungsebenen der ersten zwei Kraftumleitelemente 24e, 24e' schließen jeweils einen kleinsten Winkel, insbesondere einen Schnittwinkel, von zumindest 20°, vorzugsweise von zumindest 40° und besonders bevorzugt von zumindest 60°, und maximal 80°, vorzugsweise maximal 70° ein. Die Symmetrieebene 28e und die Haupterstreckungsebenen eines ersten Kraftumleitelements 24e, sowie die Symmetrieebene 28e und die Haupterstreckungsebenen eines zweiten Kraftumleitelements 24a' schließen jeweils einen Schnittwinkel von annähernd 65° ein.

Das dritte und vierte Kraftumleitelement 26e, 26e' ist jeweils von einem die Aufnahmenut 20e, 20e' zumindest im Wesentlichen ausfüllenden Dämpfungskörper gebildet. Die jeweils von einem Dämpfungskörper gebildeten Kraftumleitelemente 26e, 26e' sind aus einem von dem Grundkörper 18e differierenden Material gebildet ist. Die jeweils von einem Dämpfungskörper gebildeten Kraftumleitelemente 26e, 26e' sind aus einem gegenüber dem Grundkörper 18e weicheren Material. Die Kraftumleitelemente 26e, 26e' sind jeweils von einem Dämpfungskörper gebildet, der vollständig auf einer der Wischlippe 14a zugewandten Seite der Führungselemente 22e, 22e', zwischen dem jeweiligen Führungselement 22e, 22e' und dem ersten bzw. zweiten Kraftumleitelement 24e, 24e', in der Aufnahmenut 20e, 20e' angeordnet ist.

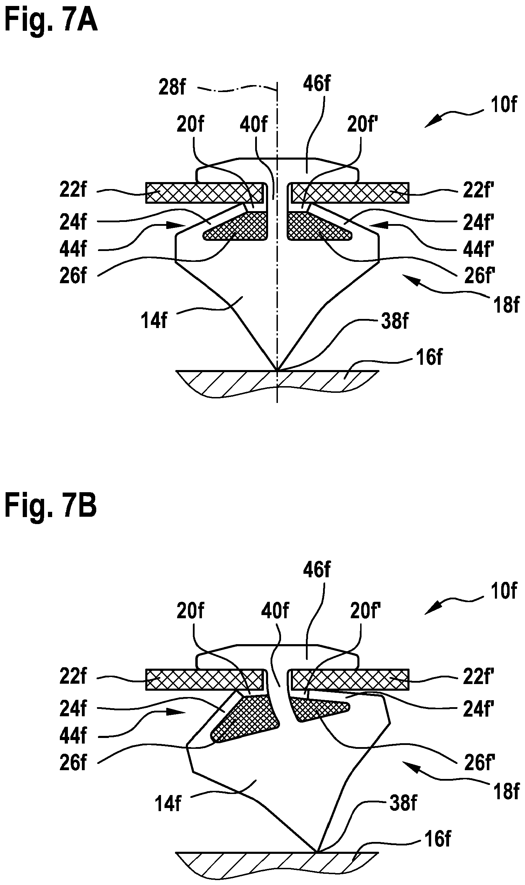

Die Figuren 7A, 7B und 7C zeigen eine Wischleiste 10f und zwei Führungselemente 22f, 22e' in verschiedenen Zuständen. Die Wischleiste 10f weist eine Wischlippe 14f und einen Grundkörper 18f auf. Der Grundkörper 18f bildet zwei Aufnahmenuten 20f, 20e' aus, die jeweils zu einer Aufnahme einer der Führungselemente 22f, 22e' des Wischblatts 12f vorgesehen sind.

Ferner weist die Wischleiste 10f vier Kraftumleitelemente 24f, 24e', 26f, 26e' auf, welche jeweils zu einer Umleitung einer Kraft eines der Führungselemente 22f, 22e' vorgesehen sind.

Ein erstes und zweites Kraftumleitelement 24f, 24f' ist jeweils von einem Steg gebildet. Die ersten zwei Kraftumleitelemente 24f, 24f' sind jeweils von einem lamellenartigen Steg gebildet. Die ersten zwei Kraftumleitelemente 24f, 24f' sind jeweils auf einer der Wischlippe 14f zugewandten Seite der Führungselemente 22f, 22f' angeordnet. Die ersten zwei Kraftumleitelemente 24f, 24f' erstrecken sich jeweils entlang der Haupterstreckungsrichtung 36f der Wischleiste 10f über eine gesamte Erstreckung der Wischleiste 10f. Die ersten zwei Kraftumleitelemente 24f, 24f' weisen jeweils entlang der Haupterstreckungsrichtung 36f der Wischleiste 10f einen gleichbleibenden Querschnitt auf. Die ersten Kraftumleitelemente 24f, 24f' sind jeweils von einem an der Aufnahmenut 20f, 20f' angeordneten Steg gebildet, welcher mit einem freien Ende in die Aufnahmenut 20f, 20f' ragt. Die ersten Kraftumleitelemente 24f, 24f' sind einstückig mit dem Grundkörper 18f ausgebildet.

In einem entspannten Zustand ragen die ersten Kraftumleitelemente 24f, 24f' jeweils gegenüber der Symmetrieebene 28f der Wischleiste 10f abgewinkelt in die jeweils zugeordnete Aufnahmenut 20f, 20f'. Die Symmetrieebene 28f und die Haupterstreckungsebenen eines ersten Kraftumleitelements 24f, sowie die Symmetrieebene 28f und die Haupterstreckungsebenen eines zweiten Kraftumleitelements 24f' schließen jeweils einen Schnittwinkel von annähernd 65° ein.

Das dritte und vierte Kraftumleitelement 26f, 26f' ist jeweils von einem die Aufnahmenut 20f, 20f' zumindest teilweise ausfüllenden Dämpfungskörper gebildet. Die jeweils von einem Dämpfungskörper gebildeten Kraftumleitelemente 26f, 26f' sind aus einem von dem Grundkörper 18f differierenden Material gebildet. Die jeweils von einem Dämpfungskörper gebildeten Kraftumleitelemente 26f, 26f' sind aus einem gegenüber dem Grundkörper 18f weicheren Material. Die Kraftumleitelemente 26f, 26f' sind jeweils von einem Dämpfungskörper gebildet, der vollständig auf einer der Wischlippe 14f zugewandten Seite der Führungselemente 22f, 22f', zwischen dem ersten bzw. zweiten Kraftumleitelement 24f, 24e' und einem der Wischlippe 14f zugewandten Teil des Grundkörpers 18a, in der Aufnahmenut 20f, 20f' angeordnet ist.

## Patentansprüche

1. Wischleiste für ein Wischblatt mit zumindest einer Wischlippe (14e-f), welche zu einem direkten Anliegen an eine Fahrzeugscheibe (16e-f) vorgesehen ist, und mit zumindest einem Grundkörper (18e-f) der zumindest eine Aufnahmenut (20e, 20e'; 20f, 20f') zu einer Aufnahme zumindest eines Führungselements (22e, 22e'; 22f, 22f'), insbesondere zumindest einer Federschiene, des Wischblatts ausbildet, wobei zumindest ein Kraftumleitelement (24e, 24e', 26e, 26e'; 24f, 24f', 26f, 26f'), zu einer Umleitung einer Kraft des Führungselements (22e, 22e'; 22f, 22f') vorgesehen ist, **dadurch gekennzeichnet, dass** die Wischleiste vier Kraftumleitelemente (24e, 24e', 26e, 26e'; 24f, 24f', 26f, 26f') aufweist, welche jeweils zu einer Umleitung einer Kraft eines der Führungselemente vorgesehen sind, wobei ein erstes und zweites Kraftumleitelement (24e, 24e'; 24f, 24f') jeweils von an der Aufnahmenut (20e, 20e'; 20f, 20f') angeordneten Steg gebildet sind, welcher mit einem freien Ende in die Aufnahmenut (20e, 20e'; 20f, 20f') oder aus die Aufnahmenut (20e, 20e'; 20f, 20f') ragt und das dritte und vierte Kraftumleitelement (26e, 26e'; 26f, 26f') jeweils von einem die Aufnahmenut (20e, 20e'; 20f, 20f') zumindest teilweise ausfüllenden Dämpfungskörper gebildet sind, die aus einem von dem Grundkörper (18e-f) differierenden Material gebildet sind.

2. Wischblatt mit einer Wischleiste nach Anspruch 1.

## Claims

1. Wiper strip for a wiper blade with at least one wiper lip (14e-f) which is provided for bearing directly against a vehicle pane (16e-f), and with at least one main body (18e-f) which configures at least one receiving groove (20e, 20e'; 20f, 20f') for receiving at least one guide element (22e, 22e'; 22f, 22f'), in particular at least one spring bar, of the wiper blade, at least one force deflecting element (24e, 24e', 26e, 26e'; 24f, 24f', 26f, 26f') being provided for the deflection of a force of the guide element (22e, 22e'; 22f, 22f'), **characterized in that** the wiper strip has four force deflecting elements (24e, 24e', 26e, 26e'; 24f, 24f', 26f, 26f') which are each provided for the deflection of a force of one of the guide elements, a first and a second force deflecting element (24e, 24e'; 24f, 24f') being formed in each case by a web which is arranged on the receiving groove (20e, 20e'; 20f, 20f') and protrudes with one free end into the receiving groove (20e, 20e', 20f, 20f') or out of the receiving groove (20e, 20e'; 20f, 20f'), and the third and fourth force deflecting element (26e, 26e'; 26f, 26f') each being formed by a damping body which at least partially fills the receiving groove (20e, 20e'; 20f, 20f'), which damping bodies are formed from a material which is different from the main body (18e-f).

2. Wiper blade with a wiper strip according to Claim 1.

## Revendications

1. Lame d'essuie-glace destinée à un balai d'essuie-glace et comprenant au moins une lèvre d'essuyage (14e-f) qui est prévue pour venir en appui directement sur un pare-brise de véhicule (16e-f), et au moins un corps de base (18e-f) qui forme au moins une rainure de réception (20e, 20e' ; 20f, 20f') destinée à recevoir au moins un élément de guidage (22e, 22e' ; 22f, 22f'), notamment au moins un rail à ressort, du balai d'essuie-glace, au moins un élément de déviation de force (24e, 24e', 26e, 26e' ; 24f, 24f', 26f, 26f') étant prévu pour dévier une force de l'élément de guidage (22e, 22e' ; 22f, 22f'), **caractérisée en ce que** la lame d'essuie-glace comporte quatre éléments de déviation de force (24e, 24e', 26e, 26e' ; 24f, 24f', 26f, 26f') qui sont chacun prévus pour dévier une force de l'un des éléments de guidage, un premier et un deuxième élément de déviation de force (24e, 24e' ; 24f, 24f') étant chacun formés par une nervure qui est disposée au niveau de la rainure de réception (20e, 20e' ; 20f, 20f') et qui fait saillie par une extrémité libre dans la rainure de réception (20e, 20e' ; 20f, 20f') ou de la rainure de réception (20e, 20e' ; 20f, 20f') et les troisième et quatrième éléments de déviation de force (26e, 26e' ; 26f, 26f') étant chacun formés par un corps d'amortissement remplissant au moins partiellement la rainure de réception (20e, 20e' ; 20f, 20f') et qui est formé à partir d'un matériau différent de celui du corps de base (18e-f).

2. Balai d'essuie-glace comprenant une lame d'essuie-glace selon la revendication 1.
